(19) Europäisches Patentamt
European Patent Office
Office européen des brevets

(11) EP 4 807 598 A1

(12) EUROPEAN PATENT APPLICATION

(43) Date of publication:
**16.09.2026 Bulletin 2026/38**

(21) Application number: **25179923.5**

(22) Date of filing: **30.05.2025**

(51) International Patent Classification (IPC):
***G06F 21/55*** *(2013.01)* ***G06F 21/56*** *(2013.01)*
***G06F 21/57*** *(2013.01)* ***H04L 9/40*** *(2022.01)*

(52) Cooperative Patent Classification (CPC):
**G06F 21/55; G06F 21/552; G06F 21/554; G06F 21/56; G06F 21/577; H04L 63/1425; H04L 63/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.03.2025 IL 31950825**

(71) Applicant: **Deutsche Telekom AG**
**53113 Bonn (DE)**

(72) Inventors:
- **PELED, Roy**
  **7980000 Ezer (IL)**
- **BRODT, Oleg**
  **8471621 Beer Sheva (IL)**
- **SHABTAI, Asaf**
  **7684200 Hulda (IL)**
- **ELOVICI, Yuval**
  **7986400 Arugot (IL)**
- **HOLSCHKE, Oliver**
  **10969 Berlin (DE)**
- **PLACHY, Jan**
  **13158 Berlin (DE)**

(74) Representative: **Müller, Christian Stefan Gerd**
**ZSP Patentanwälte PartG mbB**
**Hansastraße 32**
**80686 München (DE)**

# (54) A SYSTEM AND A METHOD FOR TRUSTED POWER-BASED MONITORING FOR DETECTING CYBERATTACKS ON SATELLITE SYSTEMS

(57) A method for detecting cyberattacks on satellite systems, according to which native telemetry data produced by subsystems of the satellite are collected and transmitted to the ground station for monitoring and control. Data generated by a trusted power monitoring device is also collected, for monitoring the energy consumption data from the satellite's primary power source. The satellite's energy consumption data is then transmitted to a ground station, via a separate dedicated out-of-band communication channel. The native telemetry data which is collected by a data collection apparatus, is compared (by a computerized device having at least one processor and associated memory) to the energy consumption data, collected by the trusted power monitoring device and the comparison results are analyzed by a trained ML model (such as a deep-learning-based model) on the computerized device, to detect discrepancies or anomalies being indicative of possible telemetry data manipulation. Upon detecting discrepancies or anomalies by the model, an alert regarding a potential cybersecurity event is issued by the computerized device.

EP 4 807 598 A1

## Description

### Field of the Invention

The present invention relates to the field of cybersecurity. More particularly, the present invention relates to a system and a method for trusted power-based monitoring for detecting cyberattacks on satellite systems.

### Background for the Invention

Space technology has been instrumental in shaping the information age, influencing daily lives. Today, satellites are essential for delivering a varaity of services that are an integral part of modern life, including meteorology [40, 48, 55], navigation [59, 60, 66], satellite communications (SATCOMs) [21,23,49,50,95], and intelligence [28,77]. As technological advances have reduced the costs of building, launching, and maintaining satellites and with wider access to commercial satellite hardware [33, 71], it has become financially and technologically viable to provide these services using satellites [45]. Consequently, there has been a rapid increase in space missions and the number of satellites in orbit has grown dramatically in recent years.

As digital assets move to space, they must be safe and secure. With growing reliance on satellites, cyber threats are becoming more pronounced, while the era of space renaissance attracts not only space entrepreneurs, corporations, and civil society but also cyber threat actors. It has been found that the frequency of attacks on satellites from 2009 to 2018 was five times higher than from 2000 to 2008.

Satellites have increasingly become targets of sophisticated cyberattacks [68], posing serious threats to communication, navigation, and intelligence systems. These attacks manifest in various forms, including communication threats such as jamming, eavesdropping, spoofing, replay attacks (a form of network attacks in which valid data transmission is maliciously or fraudulently repeated or delayed), and sensor injection/hijacking [1, 38, 67, 82]. Such attacks may also be more destructive, such as Anti-Satellite (ASAT) weapons (space weapons designed to incapacitate or destroy satellites for strategic or tactical purposes), including electromagnetic pulse (EMP - a brief burst of electromagnetic energy) and ultra-wideband (UWB) weapons [9, 34]. Furthermore, the evolving nature of cyber threats has led to sophisticated methods like Computer Network Exploitation (CNE), which encompasses social engineering (malicious activities accomplished through human interactions, using psychological manipulation to trick users into making security mistakes or giving away sensitive information), backdoors (undocumented methods that bypass normal system security, allowing unauthorized access), and Distributed Denial of Service (DDoS) attacks [8, 36, 92]. Internal threats are particularly alarming, including data corruption, hardware backdoors, privilege escalation (a cybersecurity technique where an attacker uses vulnerabilities or exploits to gain higher-level access on a system or network than initially granted), and Denial of Service (DoS) attacks [10,19].

Recently, malware attacks have become increasingly prevalent, with generic and bespoke malware targeting satellite systems [1]. The goal of these cyberattacks is often to gain unauthorized control or hijack satellite systems, thereby compromising their integrity and functionality [29, 38]. Notable incidents, such as the Viasat cyberattack and the ICARUS DdoS attack on low-orbit satellite networks, exemplify the nature of these threats [11, 39, 94]. These attacks not only disrupted communication networks but also highlighted the vulnerabilities of satellite systems to cyber warfare.

Satellite systems face unique cybersecurity challenges due to their physical, operational, and technological constraints. Unlike terrestrial systems, satellites are physically inaccessible after launch, thereby requiring reliance on remote monitoring and control mechanisms. This creates persistent vulnerabilities, as hardware cannot be physically secured or updated [75].

Satellites often operate with outdated hardware and software due to long development cycles, leaving them vulnerable to evolving cyber threats. Additionally, their relatively harsh operating environment, characterized by extreme radiation, temperature fluctuations, and microgravity, further complicates the implementation of robust cybersecurity measures [54].

The long operational lifespans of satellites exacerbate these challenges, as they frequently exceed the typical life cycle of cybersecurity technologies. A successful cyberattack on a satellite can disrupt critical infrastructure, including communications, navigation, and national security, with cascading effects if satellite constellations are targeted [67].

Communication limitations, such as bandwidth constraints and latency, hinder real-time threat detection and response. Reliance on telemetry data for satellite health assessments makes systems susceptible to manipulation and underscores the need for independent, trusted monitoring solutions [74].

The increase in attacks on satellite systems and the lack of adequate security measures create a widening security gap that must be addressed [82].

A significant risk for satellites is that most of them depend on mission control commands transmitted by ground stations. To generate correct commands, ground stations must monitor the satellite using telemetry data from the satellite. Tampering with this data could create a discrepancy between the real-world state and the state inferred from monitoring

data, resulting in incorrect commands being sent to the satellite, mission failure, and catastrophic consequences. Therefore, establishing a secure and reliable method for satellite monitoring is vital.

A satellite ecosystem consists of ground-segment components (i.e., components not launched into space) and space-segment components (i.e., components launched into space). The ground-segment and the space-segment components are linked together via a communication-segment.

The ground segment is crucial in satellite communications, and is responsible for controlling space segment components and ensuring effective satellite operation and data transmission [69].

While the components typically include a ground station, mission control, data processing center, and a remote terminal.

A Ground Station (GS) operates as the interface between the ground segment and the space segment [41, 54]. The type of ground station is chosen based on mission objectives, service types, and communication requirements, utilizing specialized equipment such as radios and modems [79]. The ground station typically consists of equipment installed on the ground, capable of sending and receiving communications to and from the satellite and, in some cases, tracking the satellite.

There are several types of ground stations:

- **Traditional Ground Stations:** Physical installations equipped with antennas and receivers for direct satellite communication [42].
- **Cloud-Based Ground Stations (GSaaS):** With the rise of cloud technology, operators began offering cloud-based ground stations as a service, exemplified by services such as Amazon Web Services (AWS) Ground Station and Azure Orbital Ground Station [7, 86].
- **Custom Ground Stations:** Constructed using off-the-shelf components and tailored to specific mission needs, including potentially malicious purposes like eavesdropping on satellite communications or mounting attacks against satellites [87].

Control centers typically send telecommands (commands to control space systems) to the satellite, perform analysis to plan orbital maneuvers and assess conjunctions, monitor the health of space systems, and manage other aspects of space system operations [27].

Satellites generally send back payload data (from its pay-loads, such as cameras) and telemetry data, which typically include information about the satellite itself (such as health information of various components) [31]. The mission control function is sometimes referred to as a "control segment" when combined with the data processing capability for the payload data or telemetry data received by the ground station from the satellite [30, 54].

All data sent and received between mission control and the satellite traverses via a ground station.

The Data Processing Center is responsible for managing, processing, and analyzing payload data and telemetry from space missions. It employs advanced technologies and collaborative efforts to enhance mission capabilities and optimize data utilization [27, 63].

Remote terminals can function as mission control, a ground station, or both while being located separately. In cases such as global satellite networks, communication often relies on a network of ground antennas instead of a single ground station. To allow continuous global communication, the primary ground station is linked to remote antennas (of secondary ground stations) deployed at various locations, which can be either stationary or mobile [5]. Additionally, some of these remote terminals empower mission personnel, such as payload controllers and scientists, to access or transmit data independently of the mission control center, effectively serving as an auxiliary mission control [27].

Satellites are categorized, based on their altitude into three main types: Low Earth Orbit (LEO), Medium Earth Orbit (MEO), and Geostationary Earth Orbit (GEO) satellites [51].

LEO satellites are situated close to Earth's surface, typically at altitudes ranging from approximately 160 to 2,000 kilometers. They are notable for their incorporation of Commercial Off-The-Shelf (COTS) hardware, which significantly reduce operational costs [46]. The vast majority of nanosatellites are classified as LEO satellites.

LEO satellites consist of various subsystems, each serving a specific purpose:

- Electrical Power Subsystem (EPS): Manages the satellite's power supply;
- Attitude Determination and Control Subsystem (ADCS): Ensures the satellite's orientation and stability. This subsystem typically includes a magnetometer module responsible to determine orientation, a reaction wheel module which is responsible for steering control; and other modules;
- Communication Subsystem: Handles the transmission and reception of signals; in some cases, this subsystem is implemented as an integral part of TT&C.
- Telemetry, Tracking, and Command (TT&C): Collects telemetry data and transmits it to ground stations;
- Thermal Control Subsystem (TCS): Maintains optimal temperature conditions;
- Propulsion Control Subsystem (PCS): Manages propellant and thrusters for orbital adjustments;

- Command & Data Handling Subsystem: Executes commands and manages satellite data.

In addition to these subsystems, LEO satellites carry a payload that consists of specialized equipment or instruments designed to fulfill their mission objectives. These objectives can range from communication, Earth observation, weather monitoring, scientific research, to navigation. Unlike the subsystems, which are essential to the satellite's infrastructure, the payload is focused on specific applications of the satellite [2].

Machine Learning (ML) models became popular tools in anomaly detection on satellite telemetry, specifically in the context of satellite security [16,62,64,65,73,89]. Recent initiatives like the OPS-SAT mission allow researchers to use a real-world satellite mission to validate their anomaly detection models [73]. Various satellite telemetry factors like latency and accuracy, could be relevant for selecting an appropriate anomaly detection algorithm [62]. Long Short-Term Memory (LSTM) models (a type of recurrent neural network (RNN) aimed at mitigating the vanishing gradient problem commonly encountered by traditional RNNs) were used to detect anomalies by identifying irregular power consumption patterns, thanks to their ability to remember information over extended periods of time. Bi-directional LSTMs were used to analyze SMAP satellite telemetry data streams, including temperature, solar panel angular velocity, and active power systems. By considering both past and future contextual information, anomaly detection rates were improved [65].

An unsupervised anomaly detection method in satellite operations has been demonstrated in [64]. They analyzed system health telemetry data using a deep clustering technique to identify outliers. Lastly, it is worth mentioning that Generative Adversarial Networks (GANs - a class of neural networks that autonomously learn patterns in the input data to generate new examples resembling the original dataset) have shown the ability to detect anomalies in satellite communications that are difficult to identify with traditional techniques by enabling a competitive training process [89].

The threat landscape for satellite systems is diverse, featuring a variety of potential attack vectors that adversaries can exploit to disrupt operations or gain unauthorized access. These threats can manifest at different stages of a satellite's lifecycle, from the initial design and manufacturing phases to launch and on-orbit operations. Adversaries may attempt to infiltrate the supply chain [91], deploying malware before the satellite is launched. Alternatively, they could target ground control systems or exploit software vulnerabilities [20] to gain remote access and execute malicious payloads once the satellite is in orbit.

Currently, there is a significant gap in satellite security: operators heavily rely on telemetry data that can be manipulated by attackers at various points. Telemetry corruption poses a substantial risk, potentially crippling a satellite's functionality and compromising the integrity of mission-critical data streams. By injecting malicious code into onboard systems or ground infrastructure, attackers can manipulate telemetry data streams to mask true satellite states or conceal unauthorized activities. Such manipulations can mislead operators and compromise mission-critical operations. The impacts of telemetry corruption extend beyond operational disruptions to potentially catastrophic failures, as ground control may remain unaware of the actual satellite conditions. Mitigating this risk can be straightforward in some cases; for

instance, as telemetry is transmitted via wireless communication channels, it can be digitally signed and encrypted to prevent interception or manipulation in transit. However, ensuring the telemetry data has not been altered before transmission is more challenging, especially when adversaries have gained a foothold in the satellite's telemetry generation facility.

Satellite cybersecurity relies on onboard telemetry for anomaly detection [16, 65, 89]. While anomaly detection can be effective under normal conditions, telemetry data can be compromised during a cyberattack, thereby rendering these methods unreliable. An attacker could falsify the telemetry data or substitute it with data that appears valid, making anomaly detection techniques ineffective. Therefore, reliance on potentially untrusted telemetry data creates a critical gap in satellite security strategies.

Power analysis involves examining power consumption patterns to identify anomalies that may suggest a cyberattack. The foundation of this method lies in the unique power signatures associated with different computing activities. By monitoring and analyzing deviations from these power signatures, it is possible to detect abnormal behavior.

Existing methods have been implemented for detecting cyberattacks by analyzing power consumption patterns. These methods have been applied to laptops, IoT devices, and embedded systems, leveraging external power measurements to detect anomalies without relying on internal system data. However, these techniques have not been adapted to the unique challenges of satellite systems, where harsh environmental conditions, limited access, and long operational lifetimes pose additional constraints.

It is therefore an object of the present invention to provide a system and a method for detecting cyberattacks on satellite systems, based on trusted power-based monitoring.

It is another object of the present invention to provide a system and a method for preventing tampering telemetry data from the satellite.

Other objects and advantages of the invention will become apparent as the description proceeds.

## Summary of the Invention

A method for detecting cyberattacks on satellite systems, according to which native telemetry data produced by subsystems of the satellite are collected and transmitted to the ground station for monitoring and control. Data generated by a trusted power monitoring device is also collected, for monitoring the energy consumption data from the satellite's primary power source. The satellite's energy consumption data is then transmitted to a ground station, via a separate dedicated out-of-band communication channel. The native telemetry data which is collected by a data collection apparatus, is compared (by a computerized device having at least one processor and associated memory) to the energy consumption data, collected by the trusted power monitoring device and the comparison results are analyzed by a trained ML model (such as a deep-learning-based model) on the computerized device, to detect discrepancies or anomalies being indicative of possible telemetry data manipulation. Upon detecting discrepancies or anomalies by the model, an alert regarding a potential cybersecurity event is issued by the computerized device.

The separate dedicated communication channel trusted power monitoring device may be an out-of-band communications channel.

The collection of data generated by a trusted power monitoring device and the transmission of the satellite's energy consumption data to a ground station may be performed independently of the satellite's other components and communication channels, to thereby ensure measurement and data integrity.

Gathering out-of-band current and battery voltage data may be performed by a dedicated Voltage-Current Data Acquisition (DAQ) sampler.

Telemetry data may be received from the satellite via a standard telemetry channel.

The power data collected by the trusted power monitoring device may be analyzed to infer the functioning state of the satellite's subsystems.

The state of the satellite's subsystems may be inferred from the energy consumption data by a lightweight LSTM model to determine which satellite subsystems are currently operational.

The method may further comprise the steps of:

a) packaging the collected current and voltage measurements into first and second respective Time Series (TS), each created from each measurement stream within the same time window;
b) processing each time series by a first LSTM model, for capturing temporal dependencies within a predetermined sliding window and transforming the power consumption data contained in the time window into an output vector;
c) processing the output of the first LSTM model is by an additional LSTM layer, to capture additional nuanced relationships in the data;
d) for each time window, receiving by an attention layer output vectors to perform features extraction and assigning weights to each time step, to assign a single most important feature to each vector;
e) normalizing the output for the next layer;
f) selecting the most prominent data from the LSTM while filtering out the noise resulting in a vector representing the entire time window; and
g) predicting the next states of each subsystem.

The current state may be determined by the model by performing a majority vote of the predictions.

A greater weight may be assigned to states where a subsystem is active.

Data analysis may be conducted onboard the satellite, at the ground station, or on a dedicated satellite in a multi-satellite constellation.

Raw energy consumption data may be transmitted directly to a ground station via a dedicated channel, where the analysis is performed.

Both data collection and data analysis may be executed onboard the satellite.

A system for detecting cyberattacks on satellite systems, comprising:

a) a trusted power monitoring device for monitoring the energy consumption data from the satellite's primary power source;
b) a data collection apparatus for:

collecting native telemetry data produced by subsystems of the satellite and
transmitted to a ground station for monitoring and control;
collecting data generated by the trusted power monitoring device;

c) an onboard transmitter for transmitting the satellite's energy consumption data to a ground station, via a separate dedicated out-of-band communication channel;

d) a computerized device having at least one processor and associated memory, being configured to:
compare the native telemetry data to the energy consumption data, collected by the trusted power monitoring device;
e) analyze the comparison results by a trained machine learning (ML) model, to detect discrepancies or anomalies being indicative of possible telemetry data manipulation; and
f) upon detecting discrepancies or anomalies by the trained model, issue an alert regarding a potential cybersecurity event.

## Brief Description of the Drawings

The above and other characteristics and advantages of the invention will be better understood through the following illustrative and non-limitative detailed description of preferred embodiments thereof, with reference to the appended drawings, wherein:

- Fig. 1 shows a block diagram of the Threat Model - malware deployment options;
- Fig. 2 shows a flowchart of the Data Analysis Model Architecture; and
- Fig. 3 shows a block diagram of the Implementation Scenarios.

## Detailed Description of the Invention

The present invention provides a system (framework) and a method for trusted power-based monitoring for detecting cyberattacks on satellite systems. The proposed trusted monitoring framework for satellite systems utilizes out-of-band power analysis of satellite sub-systems. This approach directly detects anomalies in voltage and current patterns, drawn from the satellite's battery system, independent of onboard telemetry. By leveraging external power measurements, the proposed method provides a non-intrusive means to monitor satellite health and detect cyberattacks, even when telemetry data cannot be trusted.

Power analysis of satellite systems offers several advantages. First, it circumvents the vulnerabilities associated with telemetry manipulation by providing a trusted and independent data source. Second, it builds upon proven power side-channel techniques adapted to the satellite environment. Finally, it enables real-time anomaly detection with minimal impact on satellite resources, making it a practical solution for modern satellite constellations.

At the first step, a power consumption fingerprint is created for each subsystem of the satellite. The created fingerprint includes a model that learns the actual activity of the satellite at the sub-system level (e.g., after activating a heater), based on the respective power consumption patterns of the entire satellite. This allows inferring the actual activity of the sub-systems by monitoring the power consumption of the satellite and comparing it against the model. At the next step, the inferred activity is compared to the telemetry sent by the satellite. If the prediction matches the telemetry (e.g., the telemetry indicates that the heater was activated, and the model supports this indication), it is concluded that the telemetry is correct. Otherwise, if the telemetry diverges from the model's predictions, an anomaly alert is issued for further investigation.

By leveraging the inherent security strengths of an out-of-band methodology (that involves managing network devices through a dedicated channel, separate from the production network) based on the physical property of power consumption and comparing it against the telemetry data, the framework offers immunity against pervasive on-board threats and supply chain risks. Correlating telemetry data with energy consumption patterns provides a reliable marker for detecting cyberattacks, underscoring the efficacy of out-of-band monitoring in the context of satellite security.

The framework proposed by the present invention uses a threat model that assumes that an adversary has successfully implanted malware in one of the satellite sub-systems. This malware enables the execution of: (i) modification of specific satellite operations; and (ii) modifications in the telemetry data. This could occur through a supply chain compromise, such as pre-infecting the Onboard Computer (OBC) before installation in the satellite. Modern LEO satellites are typically assembled from common off-the-shelf hardware, and therefore, the satellite's security depends on its constituent parts throughout the supply chain (a supply chain attack uses third-party tools or services - collectively referred to as a 'supply chain" - to infiltrate a target's system or network. These attacks are indirect: they target the third-party dependencies that their ultimate targets rely on). If an adversary can intervene in the supply chain, he may modify the software or hardware components of the satellite before launching. Alternatively, the attacker can exploit vulnerability within an existing component to achieve these goals. As demonstrated in [35], some vulnerabilities in common satellite software could even allow an adversary to deploy ransomware (a type of malware which prevents an owner from accessing his device and the data stored on it by ilegitimate encryption, followed by a demand for a ransom in exchange for decryption). Another way to achieve this goal is through insider threats, where individuals with access to satellite systems, ground stations, or manufacturing facilities assist in deploying malicious payloads. For example, adversaries may exploit network-based vulnerabilities or use custom-built Ground Stations (GSs) to communicate directly with the satellite via unencrypted protocols. Once the malware is in place, it may be triggered through hard-coded (data that cannot be easily

changed without changing the source code of the program itself) conditions, specific events (e.g., telemetry signals), or direct commands sent by the adversary.

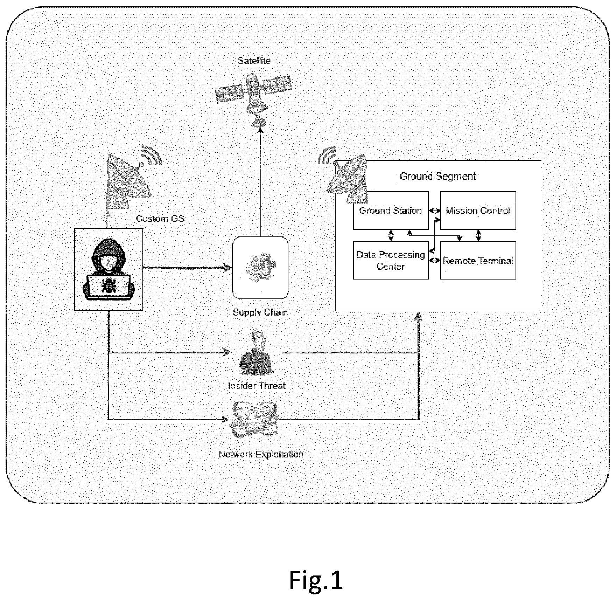

Fig. 1 illustrates several ways an adversary could deploy malware on a satellite in the form of a block diagram of the Threat Model with malware deployment options. One way is malware deployment via the supply chain (red path). Another way is malware deployment via an insider threat (green path). Another way is malware deployment via network exploitation (the act of infiltrating and compromising computer networks, systems, or devices for espionage or cyber-attacks -blue path). Another way is malware deployment via a custom GS (orange path).

Various attacks are covered by the proposed framework's a threat model. A common feature among all attacks is that:

- Each attack involves activating or shutting down a satellite subsystem; and
- In each case, the adversary falsifies telemetry data to conceal the malicious activity.

For example, the following attacks are considered against the following satellite subsystems:

- A heater component of the Thermal Control Subsystem (TCS) that manages temperature of satellites;
- A Magnetometer component of the Attitude Determination and Control System (ADCS), which is required when the orientation (attitude) of the spacecraft is important and must be known and controlled. This subsystem stabilizes the spacecraft and orients it in the desired directions during the mission, despite external disturbance torques acting on it;
- Camera payload;
- Communication subsystem; and
- Computational module payload.

These attacks represent several attack scenarios against typical satellite subsystems The general nature of the attack also allows it to extend to other subsystems.

Table 1 summarizes attack scenarios and expected outcomes for each attack.

**Table 1: Summary of Attacks on Satellite Subsystems**

| Attack Target | Attack Scenario | Expected Outcomes |
|---|---|---|
| **Heater component of the TCS subsystem** | • Activate/deactivate the heater<br>• Falsify telemetry data to mask heater activity to the desired state | • Freeze/overheat the satellite<br>• Spend energy to exhaust the battery |
| **Magnetometer component of the ADCS subsystem** | • Activate/deactivate the magnetometer<br>• Falsify magnetometer results<br>• Falsify telemetry data to mask malicious activity | • Interfere with the satellite's attitude control, potentially changing its position or orientation<br>• Spend energy to exhaust the battery |
| **Communication subsystem** | • Selectively filter out data from being sent or received by the satellite<br>• Falsify telemetry data to mask malicious activity | • Interfere with satellite mission<br>• Cause operational disruptions |
| **Camera payload** | • Activate the camera payload without authorization<br>• Falsify telemetry data to mask unauthorized activity | • Take unauthorized images, potentially capturing sensitive areas<br>• Spend energy to exhaust the battery |
| **Computational payload** | • Initiate computationally intensive CPU processes<br>• Falsify telemetry data to mask unauthorized activity | • Potentially cause system slow-downs or instability due to resource exhaustion<br>• Spend energy to exhaust the battery |

The thermal control subsystem ensures that the satellite's temperature remains within safe limits. This subsystem achieves this by activating heaters when necessary. In an attack on the heater component of the TCS sub-system, attackers manipulate this subsystem to disrupt the satellite's temperature regulation, either by activating heaters unnecessarily or by disabling cooling. Such interference risks may cause irreversible hardware damage due to thermal stress, draining the satellite's power supply, shortening its operational life, and compromising mission success.

The satellite's magnetometer module measures Earth's magnetic field to determine orientation, support navigation, map magnetic fields, study space weather, and conduct scientific research. During an attack on the magnetometer module of the ADCS subsystem, adversaries can manipulate the magnetometer module to activate it without authorization or falsify its readings, thereby disrupting the satellite's attitude determination and control systems and compromising mission objectives. This manipulation could lead to navigation errors and disrupt the ADCS functionality, resulting in navigation instability, inaccurate data, increased power consumption, and potential mission failure.

The communication subsystem is essential for command, control, and data exchange with ground stations. Any manipulation of this subsystem during an attack on the communication subsystem can lead to loss of satellite control, data theft, and operational disruptions, as it prevents the satellite from sending or receiving data.

The satellite's camera payload captures images from space, which is often a primary mission objective and critical for reconnaissance and imaging missions. An attack in the form of unauthorized use of the camera payload introduces risks such as compromising mission objectives and enables the surveillance of restricted areas.

The satellite's payload often includes computational resources, such as CPUs, which perform mission-specific tasks like processing data for weather detection. Initiating unauthorized processes that consume CPU cycles during an attack on the computational payload may degrade system performance, deplete power reserves, and create thermal management problems. These disruptions can overwhelm system resources and jeopardize mission-critical operations and satellite functionality.

As described in Table 1 above, some attacks result in the exhaustion of a satellite's physical resources, such as its CPU or battery. Resource exhaustion attacks pose a particularly critical threat to satellite operations, overwhelming onboard resources. This type of attack specifically targets the limited resources that are inherent to satellite systems, by dispatching heavy processing loads that drain the satellite's Central Processing Unit (CPU) or initiate power consuming activities-such as activating the heater-thereby depleting its electrical power reserves. These attacks can be strategically timed to coincide with periods when the satellite is in the Earth's shadow and is disconnected from solar power, while ensuring that the stored energy in the battery is rapidly consumed. This not only cripples the satellite's functionality by hindering or halting its tasks, but can also lead to a total system shutdown if the battery is completely depleted. The risk is particularly acute for satellites in Low Earth Orbit (LEO), where eclipse periods are more frequent, and time windows for solar charging are limited [4].

The framework proposed by the present invention relies on comparing two data sources generated by the satellite: (i) the native telemetry data (e.g., data that is directly collected and exported by an application or service) produced by several subsystems of the satellite and transmitted to the ground station for monitoring and control and (ii) the data generated by a trusted power monitoring device (that is effectively isolated and immune to manipulations) sent out via a separate dedicated communication channel. This monitoring device is designated to monitor the satellite's primary power source (its batteries) and report (transmit), by an onboard transmitter, the satellite's energy consumption data through a dedicated out-of-band communications channel.

The native telemetry data which is collected by a data collection apparatus, is compared (by a computerized device having at least one processor and associated memory) to the energy consumption data, collected by the trusted power monitoring device and the comparison results are analyzed by a trained ML model (such as a deep-learning-based model) on the computerized device, to detect discrepancies or anomalies being indicative of possible telemetry data manipulation. Upon detecting discrepancies or anomalies by the model, an alert regarding a potential cybersecurity event is issued by the computerized device.

This process operates independently of the satellite's other components and communication channels, to ensure both measurement and data integrity, even in cases when the remaining subsystems of the satellite are compromised.

Generally, there should not be a discrepancy between both data sources; they merely convey the state of the satellite by different means. For example, if the satellite controller turns on the heater subsystem, this should be explicitly reflected in the telemetry data and implicitly in the energy consumption data.

If the telemetry indicates that the heater was turned on, this should manifest as an additional current drawn from the battery, thereby being reflected by the power consumption data. In the event of a discrepancy between the narratives provided by the telemetry and the power measurement data, an anomaly should be raised, prompting further investigation of a potential security event.

In order to compare the telemetry and power measurement data, both types of data should be first collected and analyzed.

A dedicated Voltage-Current Data Acquisition (DAQ) sampler is utilized for power data collection, by gathering out-of-band current and battery voltage information. It is essential that this data remains secure and resistant to tampering.

Therefore, a dedicated out-of-band measurement and transmission facility are employed to achieve this goal. Simultaneously, telemetry data is received from the satellite via a standard telemetry channel. It is assumed that the telemetry data could already be compromised before analyzing it.

Once the power data is collected, it is analyzed to infer the state of the satellite's subsystems. This analysis focuses on applying a deep-learning-based model to the energy consumption data, to identify which subsystems within the satellite are functioning. The results are then cross-referenced with the telemetry data, to detect discrepancies or anomalies. To infer the functioning state of the satellite from the energy consumption data, a lightweight Long Short-Term Memory (LSTM) based model with an attention mechanism is employed. This model is designed to ingest power consumption data and determine which satellite subsystems are currently operational. The model is optimized for deployment on low-power, resource-constrained devices using TensorFlow Lite (provides a set of tools that enables on-device machine learning by allowing developers to run their trained models on mobile, embedded, and IoT devices and computers).

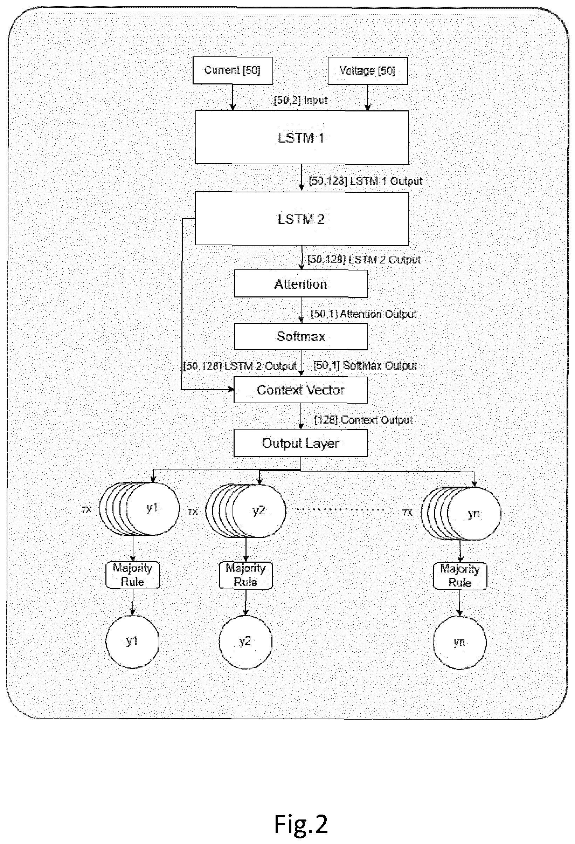

Fig. 2 illustrates a flowchart of the data analysis model architecture. This architecture balances real-time anomaly detection capabilities with computational efficiency, making it suitable for applications running on resource-constrained platforms, such as satellites.

- **Input:** The electric current and voltage measurements collected by the Voltage-Current Data Acquisition (DAQ) sampler are packaged into two respective Time Series (TS - a sequence of data points indexed or listed in time order) (e.g., one TS for the current and one TS for the voltage). The TSs are created from each measurement stream within the same time window. The time series serve as an input to the LSTM model for capturing temporal dependencies: the LSTM receives a sliding window of the last 50 samples from both TSs and transforms the power consumption data contained in that time window into an output vector of 128 indexes.
- **An additional LSTM Layer:** The output from the first LSTM model is processed by an additional LSTM layer (an RNN layer that learns long-term dependencies between time steps in time-series and sequence data), to capture more nuanced relationships in the data.
- **Attention Layer:** For each time window, an attention layer (this layer enhances LSTMs by enabling them to focus on relevant parts of the input sequence when making predictions, by calculating attention weights, applying them to the LSTM's outputs to produce a context vector that feeds into the final prediction. This allows the model to weigh different parts of the input more heavily, leading to more accurate and nuanced predictions, particularly in tasks where certain input elements are more relevant than others) receives 50 vectors of 128 indexes and learns the most important features of the input. The attention layer assigns weights to each time step (a specific point in time, representing a single data point within the time series), to highlight the most relevant parts of the time sequence, resulting in a single most important feature for each vector.
- **Softmax Layer:** softmax is used at this stage to normalize the output for the next layer (the Softmax Layer typically used as the final activation function in classification tasks. It transforms the output of the last fully connected layer into a probability distribution, where each output represents the probability of the corresponding class).
- **Context Vector Layer:** A layer that captures and represents the surrounding context of a word or phrase, enabling the model to understand the meaning of words in their broader linguistic setting. This layer relies on the output of the attention layer to select the most prominent data from the LSTM, while filtering out the "noise," resulting in a vector of 128 features representing the entire time window.
- **Output Layer:** The context vector is passed through a fully connected layer (a type of layer in a neural network where every neuron in the layer is connected to every neuron in the previous layer), which generates predictions for future time steps. The output is then reshaped to match the required dimensions. The output layer predicts the next six states of a subsystem (i.e., whether the subsystem is active or inactive). To determine the current state, the model performs a majority vote of the predictions. In this context, Y represents a given subsystem, making the model flexible to make predictions in a multi-subsystem setting.

The model's output, which determines which subsystems are currently active, is constantly compared to the satellite's telemetry data, to identify any discrepancies that may indicate possible telemetry manipulation. If such a discrepancy is identified, an alert is issued.

To train the model, a typical training setup is used. A dataset of current and voltage DAQ measurements is gathered and current and voltage vectors are constructed. After some empirical experimentation, the size of each vector is set to be 50 (X). For each X, there is a label Y that indicates the state of the various subsystems.

For Y, a multi-label variable is employed, with a binary flag for each subsystem to indicate whether it is active or not. A weighted cross-entropy with logits has been used for a loss function. This choice reflects the fact that in this case, the subsystems are inactive most of the time. This imbalance is addressed by assigning a greater weight to states where a subsystem is active.

As explained above, the proposed method comprises two main stages: (i) data collection and (ii) data analysis.

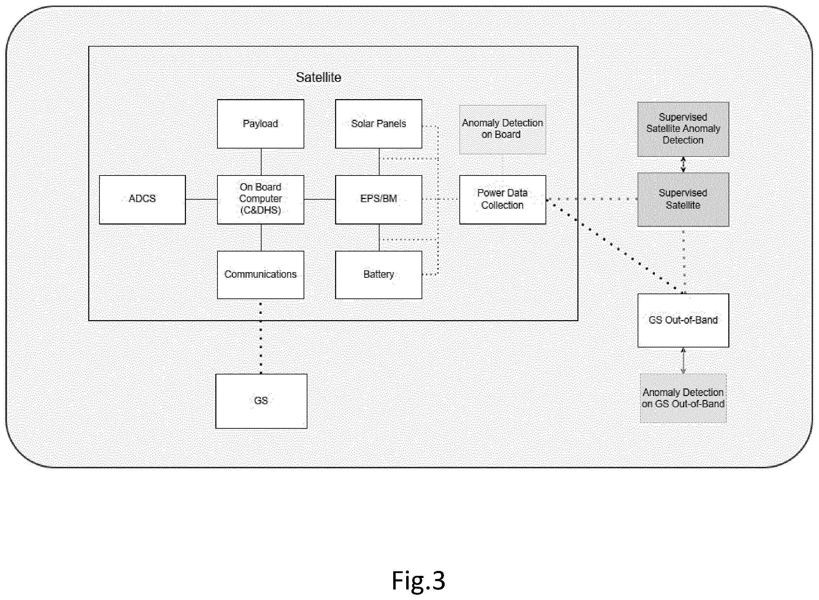

While data collection must be performed on the satellite itself, the proposed method supports various implementation choices for the data analysis stage, as illustrated in Fig. 3. The method allows data analysis to be conducted: (i) onboard the satellite, (ii) at the ground station, or (iii) on a dedicated satellite in a multi-satellite (constellation) setting.

The first scenario describes an architecture, in which the energy consumption data is transmitted directly to a ground station via a dedicated channel. In this scenario, the raw measurement data is sent to a ground station and the analysis is performed at the ground station. The components relevant to this scenario are depicted in blue in Fig. 3.

In the second scenario, both data collection and data analysis are executed onboard the satellite. This approach requires additional hardware installed on the satellite, to support trusted analysis of the energy consumption data, even in cases where the rest of the satellite is compromised. The LSTM detection model is designed to be lightweight, primarily for this scenario. The components relevant to this scenario are depicted in yellow in Fig. 3. In this case, the detection capability is more robust, since the dependency on the ground station is removed. This also enables self-remediation scenarios without awaiting external instructions.

The third Implementation is related to data analysis, onboard a satellite in a constellation setting. This scenario involves deploying a dedicated satellite, equipped to receive out-of-band telemetry through a dedicated communication channel from the members of its constellation. In this case, the task of this satellite is to perform data analysis. This scenario aligns with the prediction that future deployments of satellite constellations may include a dedicated satellite which is responsible for security functions. This may be cost-effective, as satellites become cheaper and more pervasive, with more computing infrastructure moving to space to overcome the bandwidth limitations and latency problems associated with transmitting data from satellites back to Earth. This approach would enable more efficient data processing and decision-making directly in space, without relying on constant communication with ground-based systems [12,17]. The components relevant to this scenario are also depicted in red in Fig. 3.

Fig. 3 shows a block diagram of the Implementation Scenarios. In blue: Data Analysis at the Ground Station. In Yellow: Data Analysis Onboard the Satellite. In Red: Data Analysis Onboard a Satellite in a Constellation Setting. Thick dashed lines signify radio communications; thin dashed lines depict out-of-band channels. A solid line indicates a wired connection. Solid outline rectangles embody physical components; rectangles with dashed outlines represent logical components.

As various embodiments and examples have been described and illustrated, it should be understood that variations will be apparent to one skilled in the art without departing from the principles herein. Accordingly, the invention is not to be limited to the specific embodiments described and illustrated in the drawings.

## REFERENCES

1. [1] Space attacks open database project, 2020. Accessed: October 28, 2023.
2. [2] ADDAIM, A., KHERRAS, A., AND ZANTOU, E. B. Design of low-cost telecommunications cubesat-class spacecraft. Aerospace Technologies Advancements (2010), 293.
3. [3] AL-TEKREETI, M., KAPOOR, T., MANZANO, R., ALBASIR, A., NAIK, K., GOEL, N., AND KOZLOWSKI, A. J. Machine learning based malware detection in wireless devices using power footprints. In 2019 International Symposium on Systems Engineering (ISSE) (2019), IEEE, pp. 1-8.
4. [4] ALI, A. J., KHALILY, M., SATTARZADEH, A., MASSOUD, A.,HASNA, M. O., KHATTAB, T., YURDUSEVEN, O., AND TAFAZOLLI,_R. Power budgeting of leo satellites: An electrical power system design_for 5g missions. IEEE Access 9 (2021), 113258-113269.
5. [5] ANDRES, C. R., ANSELL, N., SALCEDO, E., AND ARORA, J. Virtualizing satellite communication operations with aws, 9 2022. Accessed: October 28, 2023.
6. [6] AZMOODEH, A., DEHGHANTANHA, A., CONTI, M., AND CHOO, K.-K. R. Detecting crypto-ransomware in iot networks based on energy consumption footprint. Journal of Ambient Intelligence and Humanized Computing 9 (2018), 1141-1152.
7. [7] BAKER, R., MACHARRIE, P., PHUNG, H., HANSFORD, J., REDDY, J., CAUSEY, S., SOBANSKI, J., WALSH, S., NIEMANN, R., AND BEALL, D. Amazon web services (aws) cloud platform for satellite data processing.
8. [8] BASELT, G., STROHMEIER, M., PAVUR, J., LENDERS, V., AND MAR-TINOVIC, I. Security and privacy issues of satellite communication in the avlatlon domain. In 2022 14th International Conference on Cyber Conflict: Keep Moving!(CyCon) (2022), vol. 700, IEEE, pp. 285-307.
9. [9] BATEMAN, A. Mutually assured surveillance at risk: Anti-satellite weapons and cold war arms control. Journal of Strategic Studies 45, 1 (2022), 119-142.
10. [10] BOOK, G. Security threats against space missions. CCSDS Secretariat: Washington, DC, USA (2006).
11. [11] BOSCHETTI, N., GORDON, N. G., AND FALCO, G. Space cybersecurity lessons learned from the viasat cyberattack. In ASCEND 2022. 2022, p. 4380.

12. [12] BRUNO, M. Why Amazon Web Services is Going to Space. Aviation Week (May 2023).

13. [13] CATHIS, A., LI, G., WEI, S., ORSHANSKY, M., TIWARI, M., AND GERSTLAUER, A. Sok paper: Power side-channel malware detection. pp. 1-9.

14. [14] CAVIGLIONE, L., GAGGERO, M., LALANDE, J.-F., MAZURCZYK, W., AND URBA N'SKI, M. Seeing the unseen: revealing mobile malware hidden communications via energy consumption and artificial intelligence. IEEE Transactions on Information Forensics and Security 11, 4 (2015), 799-810.

15. [15] CHEN, Y., JIN, X., SUN, J., ZHANG, R., AND ZHANG, Y. Powerful: Mobile app fingerprinting via power analysis. In IEEE INFOCOM 2017-IEEE Conference on Computer Communications (2017), IEEE, pp. 1-9.

16. [16] CHENG, F., GUO, X., QI, Y., XU, J., QIU, W., ZHANG, Z., ZHANG, W., AND QI, N. Research on satellite power anomaly detection method based on lstm. In 2021 IEEE International Conference on Power Electronics, Computer Applications (ICPECA) (2021), IEEE, pp. 706-710.

17. [17] CIO. Data centers in space: How the final frontier becomes a server room, 2024.

18. [18] CLARK, S. S., RANSFORD, B., RAHMATI, A., GUINEAU, S., SORBER, J., XU, W., AND FU, K. {WattsUpDoc}: Power side channels to nonintrusively discover untargeted malware on embedded medical devices. In 2013 USENIX Workshop on Health Information Technologies (HealthTech 13) (2013).

19. [19] COHEN, N., WHEELER, W. A., EWART, R., AND BETSER, J. Space-craft embedded cyber defense-prototypes & experimentation. In AIAA SPACE 2016. 2016, p. 5231.

20. [20] CURBO, J., AND FALCO, G. Attack surface analysis for spacecraft flight software. Tech. rep., EasyChair, 2024.

21. [21] DARWISH, T., KURT, G. K., YANIKOMEROGLU, H., BELLEMARE, M., AND LAMONTAGNE, G. Leo satellites in 5g and beyond networks: A review from a standardization perspective. IEEE Access 10 (2022), 35040-35060.

22. [22] DE WAAL ALBERTS, A. The degree of the lack of regulation of space debris within the current space law regime and suggestions for a prospective legal framework and technological interventions. Space Security and Legal Aspects of Active Debris Removal (2019), 93-106.

23. [23] DI, B., SONG, L., LI, Y., AND POOR, H. V. Ultra-dense leo: Integration of satellite access networks into 5g and beyond. IEEE Wireless Communications 26, 2 (2019), 62-69.

24. [24] DING, F., LI, H., LUO, F., HU, H., CHENG, L., XIAO, H., AND GE, R. Deeppower: Non-intrusive and deep learning-based detection of iot malware using power side channels. In Proceedings of the 15th ACM Asia conference on computer and communications security (2020), pp. 33-46.

25. [25] DIXON, B. Investigating clustering algorithm dbscan to self-select locations for power based malicious code detection on smartphones. In 2017 Third International Conference on Mobile and Secure Services (MobiSecServ) (2017), IEEE, pp. 1-7.

26. [26] EAR, E., BAILEY, B., AND XU, S. Towards principled risk scores for space cyber risk management. arXiv preprint arXiv:2402.02635 (2024).

27. [27] EAR, E., REMY, J. L., FEFFER, A., AND XU, S. Characterizing cyber attacks against space systems with missing data: Framework and case study. In 2023 IEEE Conference on Communications and Network Security (CNS) (2023), IEEE, pp. 1-9.

28. [28] EARLY, B. R., AND GARTZKE, E. Spying from space: Reconnaissance satellites and interstate disputes. Journal of Conflict Resolution 65, 9 (2021), 1551-1575.

29. [29] ECONOMIC, U.-C., AND COMMISSION, S. R. report to congress of the US-China economic and security review commission. US-China Economic and Security Review Commission, 2019.

30. [30] EUROPEAN SPACE AGENCY. Ground segment, 2024.

31. [31] EUROPEAN SPACE AGENCY. Tt&c and pdt systems and techniques section, 2024.

32. [32] FALCO, G. The vacuum of space cyber security. In 2018 AIAA SPACE and Astronautics Forum and Exposition (2018), p. 5275.

33. [33] FALCO, G. Cybersecurity principles for space systems. Journal of Aerospace Information Systems 16, 2 (2019), 61-70.

34. [34] FALCO, G. When satellites attack: Satellite-to-satellite cyber attack, defense and resilience. In ASCEND 2020. 2020, p. 4014.

35. [35] FALCO, G., THUMMALA, R., AND KUBADIA, A. Wannafly: an approach to satellite ransomware. In 2023 IEEE 9th International Conference on Space Mission Challenges for Information Technology (SMC-IT) (2023), IEEE, pp. 84-93.

36. [36] FALCO, G., VISWANATHAN, A., AND SANTANGELO, A. Cubesat security attack tree analysis. In 2021 IEEE 8th International Conference on Space Mission Challenges for Information Technology (SMC-IT) (2021), IEEE, pp. 68-76.

37. [37] FOR OUTER SPACE AFFAIRS, U. N. O. Online index of objects launched into outer space.

38. [38] FRITZ, J. Satellite hacking: A guide for the perplexed. Culture Mandala 10, 1 (2013), 5906.

39. [39] GIULIARI, G., CIUSSANI, T., PERRIG, A., SINGLA, A., AND ZURICH, E. Icarus: Attacking low earth orbit satellite networks. In USENIX Annual Technical Conference (2021), pp. 317-331.

40. [40] GOODMAN, S. J., SCHMIT, T. J., DANIELS, J., AND REDMON, R. J. The GOES-R series: a new generation of geostationary environmental satellites. Elsevier, 2019.

41. [41] GUEST, A. N. Telemetry, tracking, and command (tt&c). In Handbook of Satellite Applications. Springer, 2017, pp. 1313-1324.

42. [42] HEWITSON, A. Satellite ground stations - everything you ever wanted to know and more..., 10 2020. Accessed: October 28, 2023.

43. [43] HIRIART, T., CASTET, J.-F., LAFLEUR, J. M., AND SALEH, J. H. Comparative reliability of geo, leo, and meo satellites. In Proceedings of the international astronautical congress, IAC-09 D (2009), vol. 1.

44. [44] JOHNSON, H., YOUNG, W., GOESSLER, ET AL. Space threat assessment 2022. Center for Strategic & International Studies., 2022.

45. [45] JONES, H. The recent large reduction in space launch cost. 48th International Conference on Environmental Systems.

46. [46] KARVINEN, K., TIKKA, T., AND PRAKS, J. Using hobby prototyping boards and commercial-off-the-shelf (cots) components for developing low-cost, fast-delivery satellite subsystems. Journal of Small Satellites 4, 1 (2015), 301-314.

47. [47] KIM, H., SMITH, J., AND SHIN, K. G. Detecting energy-greedy anomalies and mobile malware variants. In Proceedings of the 6th international conference on Mobile systems, applications, and services (2008), pp. 239-252.

48. [48] KIM, J., JEONG, U., AHN, M.-H., KIM, J. H., PARK, R. J., LEE, H., SONG, C. H., CHOI, Y.-S., LEE, K.-H., YOO, J.-M., ET AL. New era of air quality monitoring from space: Geostationary environment monitoring spectrometer (gems). Bulletin of the American Meteorological Society 101, 1 (2020), E1-E22.

49. [49] KODHELI, O., GUIDOTTI, A., AND VANELLI-CORALLI, A. Integration of satellites in 5g through leo constellations. In GLOBECOM 2017-2017 IEEE Global Communications Conference (2017), IEEE, pp. 1-6.

50. [50] KODHELI, O., LAGUNAS, E., MATURO, N., SHARMA, S. K., SHANKAR, B., MONTOYA, J. F. M., DUNCAN, J. C. M., SPANO, D., CHATZINOTAS, S., KISSELEFF, S., ET AL. Satellite communications in the new space era: A survey and future challenges. IEEE Communications Surveys & Tutorials 23, 1 (2020), 70-109.

51. [51] LI, H. Geostationary satellites collocation. Springer, 2014.

52. [52] LI, Y., HE, R., JI, X., AND XU, W. Using power side-channel to implement anomaly-based intrusion detection on smart grid terminals. In 2019 IEEE 3rd Conference on Energy Internet and Energy System Integration (EI2) (2019), IEEE, pp. 2669-2674.

53. [53] LIGHTBODY, D., NGO, D.-M., TEMKO, A., MURPHY, C. C., AND POPOVICI, E. Attacks on iot: Side-channel power acquisition frame-work for intrusion detection. Future Internet 15, 5 (2023), 187.

54. [54] MANULIS, M., BRIDGES, C. P., HARRISON, R., SEKAR, V., AND DAVIS, A. Cyber security in new space: analysis of threats, key enabling technologies and challenges. International Journal of Information Security 20 (2021), 287-311.

55. [55] MENZEL, W. P., AND PURDOM, J. F. Introducing goes-i: The first of a new generation of geostationary operational environmental satellites. Bulletin of the American Meteorological Society 75, 5 (1994), 757-782.

56. [56] MESSERGES, T. S., DABBISH, E. A., AND SLOAN, R. H. Investigations of power analysis attacks on smartcards. Smartcard 99 (1999), 151-161.

57. [57] MICHALEVSKY, Y., SCHULMAN, A., VEERAPANDIAN, G. A., BONEH, D., AND NAKIBLY, G. {PowerSpy}: Location tracking using mobile device power analysis. In 24th USENIX Security Symposium (USENIX Security 15) (2015), pp. 785-800.

58. [58] MIRAUX, L. Environmental limits to the space sector's growth. Science of The Total Environment 806 (2022), 150862.

59. [59] MORALES-FERRE, R., RICHTER, P., FALLETTI, E., DE LA FUENTE, A., AND LOHAN, E. S. A survey on coping with intentional interference in satellite navigation for manned and unmanned aircraft. IEEE Communications Surveys & Tutorials 22, 1 (2019), 249-291.

60. [60] MORTON, Y. J., VAN DIGGELEN, F., SPILKER JR, J. J., PARKINSON, B. W., LO, S., AND GAO, G. Position, navigation, and timing technologies in the 21st century: Integrated satellite navigation, sensor systems, and civil applications, volume 1. John Wiley & Sons, 2021.

61. [61] MUNNY, R., AND HU, J. Power side-channel attack detection through battery impedance monitoring. In 2021 IEEE International Symposium on Circuits and Systems (ISCAS) (2021), IEEE, pp. 1-5.

62. [62] NALEPA, J., MYLLER, M., ANDRZEJEWSKI, J., BENECKI, P., PIECHACZEK, S., AND KOSTRZEWA, D. Evaluating algorithms for anomaly detection in satellite telemetry data. Acta Astronautica 198 (2022), 689-701.

63. [63] NATIONAL AERONAUTICS AND SPACE ADMINISTRATION. 11.0 ground data systems and mission operations, 2024.

64. [64] OBIED, M. A., GHALEB, F. F., HASSANIEN, A. E., ABDELFATTAH, M., AND ZAKARIA, W. Deep clustering-

based anomaly detection and health monitoring for satellite telemetry. Big Data and Cognitive Computing 7, 1 (2023), 39.

65. [65] PAN, D., SONG, Z., NIE, L., AND WANG, B. Satellite telemetry data anomaly detection using bi-lstm prediction based model. In 2020 IEEE International Instrumentation and Measurement Technology Conference (I2MTC) (2020), IEEE, pp. 1-6.

66. [66] PARKINSON, B. W., STANSELL, T., BEARD, R., AND GROMOV, K. A history of satellite navigation. Navigation 42, 1 (1995), 109-164.

67. [67] PAVUR, J., AND MARTINOVIC, I. Building a launchpad for satellite cyber-security research: lessons from 60 years of spaceflight. Journal of Cybersecurity 8, 1 (2022), tyac008.

68. [68] PELED, R., AIZIKOVICH, E., HABLER, E., ELOVICI, Y., AND SHAB-TAI, A. Evaluating the security of satellite systems. arXiv preprint arXiv:2312.01330 (2023).

69. [69] PEREZ-NEIRA, A. I., VAZQUEZ, M. A., SHANKAR, M. B., MALEKI, S., AND CHATZINOTAS, S. Signal processing for high-throughput satellites: Challenges in new interference-limited scenarios. IEEE Signal Processing Magazine 36, 4 (2019), 112-131.

70. [70] RAMEZANPOUR, K., AMPADU, P., AND DIEHL, W. Scaul: Power side-channel analysis with unsupervised learning. IEEE Transactions on Computers 69, 11 (2020), 1626-1638.

71. [71] RAWLINS, F., BAKER, R., AND MARTINOVIC, I. Death by a thousand cots: Disrupting satellite communications using low earth orbit constellations. arXiv preprint arXiv:2204.13514 (2022).

72. [72] REED, J. H., AND GONZALEZ, C. R. A. Enhancing smart grid cyber security using power fingerprinting: Integrity assessment and intrusion detection. In 2012 Future of Instrumentation International Workshop (FIIW) Proceedings (2012), IEEE, pp. 1-3.

73. [73] RUSZCZAK, B., KOTOWSKI, K., ANDRZEJEWSKI, J., MUSIAŁ, A., EVANS, D., ZELENEVSKIY, V., BAMMENS, S., LAURINOVICS, R., AND NALEPA, J. Machine learning detects anomalies in ops-sat telemetry. In International Conference on Computational Science (2023), Springer, pp. 295-306.

74. [74] SALIM, S., MOUSTAFA, N., AND REISSLEIN, M. Cybersecurity of satellite communications systems: A comprehensive survey of the space, ground, and links segments. IEEE Communications Surveys & Tutorials (2024).

75. [75] SCHOLL, M., SCHOLL, M., AND SULOWAY, T. Introduction to cybersecurity for commercial satellite operations. US Department of Commerce, National Institute of Standards and Technology, 2023.

76. [76] SCHORR, V., KAMENEV, N., BLEISTEIN, T., WERTH, D., WENDZEL, S., AND WEIGOLD, T. Power consumption analysis as a detection indicator for cyberattacks on smart home devices. In Energy Informatics Academy Conference (2023), Springer, pp. 224-239.

77. [77] SHAOFEI, M., JIANSHENG, S., QI, Y., AND WEI, X. Analysis of detection capabilities of leo reconnaissance satellite constellation based on coverage performance. Journal of Systems Engineering and Electronics 29, 1 (2018), 98-104.

78. [78] SHELTON, M. A., SAMWEL, N., BATINA, L., REGAZZONI, F., WAGNER, M., AND YAROM, Y. Rosita: Towards automatic elimination of power-analysis leakage in ciphers. arXiv preprint arXiv:1912.05183 (2019).

79. [79] SOBOLEWSKI, J. S. Data transmission media. In Encyclopedia of Physical Science and Technology (Third Edition), R. A. Meyers, Ed., third edition ed. Academic Press, New York, 2003, pp. 277-303.

80. [80] STATISTA. Number of active satellites by year, 2024.

81. [81] TAKASAKI, K., KIDA, R., AND TOGAWA, N. An anomalous behavior detection method based on power analysis utilizing steady state power waveform predicted by lstm. In 2021 IEEE 27th International Symposium on On-Line Testing and Robust System Design (IOLTS) (2021), IEEE, pp. 1-7.

82. [82] TEDESCHI, P., SCIANCALEPORE, S., AND DI PIETRO, R. Satellite-based communications security: A survey of threats, solutions, and research challenges. Computer Networks (2022), 109246.

83. [83] UTYAMISHEV, D., AND PARTIN-VAISBAND, I. Real-time detection of power analysis attacks by machine learning of power supply variations on-chip. IEEE Transactions on Computer-Aided Design of Integrated Circuits and Systems 39, 1 (2018), 45-55.

84. [84] VATALARO, F., CORAZZA, G. E., CAINI, C., AND FERRARELLI, C. Analysis of leo, meo, and geo global mobile satellite systems in the presence of interference and fading. IEEE Journal on selected areas in communications 13, 2 (1995), 291-300.

85. [85] WANG, Y., GUO, H., AND YAN, Q. Ghosttalk: Interactive attack on smartphone voice system through power line. arXiv preprint arXiv:2202.02585 (2022).

86. [86] WERNER, D. Azure orbital space unveils software tools for space applications, 11 2022. Accessed: October 28, 2023.

87. [87] WILLBOLD, J., SCHLOEGEL, M., VÖGELE, M., GERHARDT, M., HOLZ, T., AND ABBASI, A. Space odyssey: An experimental software security analysis of satellites. In IEEE Symposium on Security and Privacy (2023).

88. [88] XU, A., JIANG, Y., CAO, Y., ZHANG, G., JI, X., AND XU, W. Addp: Anomaly detection for dtu based on power consumption side-channel. In 2019 IEEE 3rd Conference on Energy Internet and Energy System Integration (EI2)

(2019), IEEE, pp. 2659-2663.
89. [89] XU, Z., CHENG, Z., TANG, Q., AND GUO, B. An encoder-decoder generative adversarial network-based anomaly detection approach for satellite telemetry data. Acta Astronautica 213 (2023), 547-558.
90. [90] YANG, H., TANG, R., ET AL. Power consumption based android malware detection. Journal of Electrical and Computer Engineering 2016 (2016).
91. [91] YUE, P., AN, J., ZHANG, J., YE, J., PAN, G., WANG, S., XIAO, P., AND HANZO, L. Low earth orbit satellite security and reliability: Issues, solutions, and the road ahead. IEEE Communications Surveys & Tutorials (2023).
92. [92] YUEN, P. Cloudflare prevents largest ddos attack and potentially saved a lot of satellite data, 2 2023. Accessed: October 28, 2023.
93. [93] ZHANG, T., TEHRANIPOOR, M., AND FARAHMANDI, F. Trustguard: Standalone fpga-based security monitoring through power side-channel. IEEE Transactions on Very Large Scale Integration (VLSI) Systems (2023).
94. [94] ZHANG, Y., WANG, Y., HU, Y., LIN, Z., ZHAI, Y., WANG, L., ZHAO, Q., WEN, K., AND KANG, L. Security performance analysis of leo satellite constellation networks under ddos attack. Sensors 22, 19 (2022), 7286.
95. [95] ZHEN, L., BASHIR, A. K., YU, K., AL-OTAIBI, Y. D., FOH, C. H., AND XIAO, P. Energy-efficient random access for leo satellite-assisted 6g internet of remote things. IEEE Internet of Things Journal 8, 7 (2020), 5114-5128.

## Claims

**1.** A method for detecting cyberattacks on satellite systems, comprising:

a) collecting native telemetry data produced by subsystems of the satellite and transmitted to the ground station for monitoring and control;
b) collecting data generated by a trusted power monitoring device for monitoring the energy consumption data from the satellite's primary power source;
c) transmitting the satellite's energy consumption data to a ground station, via a separate dedicated out-of-band communication channel;
d) comparing said native telemetry data to said energy consumption data, collected by said trusted power monitoring device;
e) analyzing the comparison results by a trained machine learning (ML) model, to detect discrepancies or anomalies being indicative of possible telemetry data manipulation; and
f) upon detecting discrepancies or anomalies by said trained model, issuing an alert regarding a potential cybersecurity event.

**2.** A method according to claim 1, wherein the separate dedicated communication channel trusted power monitoring device is an out-of-band communications channel.

**3.** A method according to claim 1, wherein the collection of data generated by a trusted power monitoring device and the transmission of the satellite's energy consumption data to a ground station is performed independently of the satellite's other components and communication channels, to thereby ensure measurement and data integrity.

**4.** A method according to claim 1, wherein gathering out-of-band current and battery voltage data is performed by a dedicated Voltage-Current Data Acquisition (DAQ) sampler.

**5.** A method according to claim 1, wherein telemetry data is received from the satellite via a standard telemetry channel.

**6.** A method according to claim 1, wherein the power data collected by the trusted power monitoring device is analyzed to infer the functioning state of the satellite's subsystems.

**7.** A method according to claim 1, wherein the state of the satellite's subsystems is inferred from the energy consumption data by a lightweight LSTM model, to determine which satellite subsystems are currently operational.

**8.** A method according to claim 1, further comprising:

a) packaging the collected current and voltage measurements into first and second respective Time Series (TS), each created from each measurement stream within the same time window;
b) processing each time series by a first LSTM model, for capturing temporal dependencies within a predetermined sliding window and transforming the power consumption data contained in said time window into an

output vector;
c) processing the output of the first LSTM model is by an additional LSTM layer, to capture additional nuanced relationships in the data;
d) for each time window, receiving by an attention layer output vectors to perform features extraction and assigning weights to each time step, to assign a single most important feature to each vector;
e) normalizing the output for the next layer;
f) selecting the most prominent data from the LSTM while filtering out the noise resulting in a vector representing the entire time window; and
g) predicting the next states of each subsystem.

**9.** A method according to claim 8, wherein the current state is determined by the model by performing a majority vote of the predictions.

**10.** A method according to claim 8, further comprising assigning a greater weight to states where a subsystem is active.

**11.** A method according to claim 1, wherein data analysis is conducted onboard the satellite, at the ground station, or on a dedicated satellite in a multi-satellite constellation.

**12.** A method according to claim 1, wherein raw energy consumption data is transmitted directly to a ground station via a dedicated channel, where the analysis is performed.

**13.** A method according to claim 1, wherein both data collection and data analysis are executed onboard the satellite.

**14.** A method according to claim 1, wherein the trained ML model is a deep-learning-based model.

**15.** A system for detecting cyberattacks on satellite systems, comprising:

a) a trusted power monitoring device for monitoring the energy consumption data from the satellite's primary power source;
b) a data collection apparatus for:

collecting native telemetry data produced by subsystems of the satellite and transmitted to a ground station for monitoring and control;
collecting data generated by said trusted power monitoring device;

c) an onboard transmitter for transmitting the satellite's energy consumption data to a ground station, via a separate dedicated out-of-band communication channel;
d) a computerized device having at least one processor and associated memory, being configured to:
compare said native telemetry data to said energy consumption data, collected by said trusted power monitoring device;
e) analyze the comparison results by a trained machine learning (ML) model, to detect discrepancies or anomalies being indicative of possible telemetry data manipulation; and
f) upon detecting discrepancies or anomalies by said trained model, issue an alert regarding a potential cybersecurity event.

Satellite
Custom GS
Supply Chain
Insider Threat
Network Exploitation
Ground Segment
Ground Station
Mission Control
Data Processing Center
Remote Terminal

Fig.1

Current [50]
Voltage [50]
[50,2] Input
LSTM 1
[50,128] LSTM 1 Output
LSTM 2
[50,128] LSTM 2 Output
Attention
[50,1] Attention Output
Softmax
[50,128] LSTM 2 Output
[50,1] SoftMax Output
Context Vector
[128] Context Output
Output Layer
7X
y1
7X
y2
7X
yn
Majority Rule
Majority Rule
Majority Rule
y1
y2
yn

Fig.2

Satellite
Payload
On Board Computer (C&DHS)
Communications
ADCS
Solar Panels
EPS/BM
Battery
Anomaly Detection on Board
Power Data Collection
Supervised Satellite Anomaly Detection
Supervised Satellite
GS Out-of-Band
Anomaly Detection on GS Out-of-Band
GS

Fig.3

Europäisches
Patentamt
European
Patent Office
Office européen
des brevets

# EUROPEAN SEARCH REPORT

Application Number
EP 25 17 9923

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2020/327255 A1 (NGO HUYANH D [US] ET AL) 15 October 2020 (2020-10-15)<br>* paragraphs [0002], [0013], [0024], [0036], [0037], [0039], [0041] - paragraphs [0046], [0052]; figures 4, 5, 6, 7 *<br>----- | 1-6, 11-13,15<br>7-10,14 | INV.<br>G06F21/55<br>G06F21/56<br>G06F21/57<br>H04L9/40 |
| Y,D<br><br>A | NALEPA JAKUB ET AL: "Evaluating algorithms for anomaly detection in satellite telemetry data", ACTA ASTRONAUTICA, PERGAMON PRESS, ELMSFORD, GB, vol. 198, 24 June 2022 (2022-06-24), pages 689-701, XP087124233, ISSN: 0094-5765, DOI: 10.1016/J.ACTAASTRO.2022.06.026 [retrieved on 2022-06-24]<br>* section 1 *<br>----- | 7-10,14<br><br>1-6, 11-13,15 | |
| | | | TECHNICAL FIELDS SEARCHED (IPC) |
| | | | G06F<br>H04L |

The present search report has been drawn up for all claims

| Place of search | Date of completion of the search | Examiner |
|---|---|---|
| The Hague | 16 June 2025 | Pichler Trauber, M |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 17 9923

This annex lists the patent family members relating to the patent documents cited in the above-mentioned European search report. The members are as contained in the European Patent Office EDP file on
The European Patent Office is in no way liable for these particulars which are merely given for the purpose of information.

16-06-2025

| Patent document cited in search report | Publication date | Patent family member(s) | Publication date |
|---|---|---|---|
| US 2020327255 A1 | 15-10-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Space attacks open database project*, 2020
- **ADDAIM, A.** ; **KHERRAS, A.** ; **ZANTOU, E. B.** Design of low-cost telecommunications cubesat-class spacecraft. *Aerospace Technologies Advancements*, 2010, 293
- Machine learning based malware detection in wireless devices using power footprints. **AL-TEKREETI, M.** ; **KAPOOR, T.** ; **MANZANO, R.** ; **ALBASIR, A.** ; **NAIK, K** ; **GOEL, N.** ; **KOZLOWSKI, A. J.** 2019 International Symposium on Systems Engineering (ISSE) (2019). IEEE, 1-8
- **ALI, A. J.** ; **KHALILY, M.** ; **SATTARZADEH, A.** ; **MASSOUD, A.** ; **HASNA, M. O.** ; **KHATTAB, T.** ; **YURDUSEVEN, O.** ; **TAFAZOLLI,_R.** Power budgeting of leo satellites: An electrical power system design_for 5g missions. *IEEE Access*, 2021, vol. 9, 113258-113269
- **ANDRES, C. R.** ; **ANSELL, N.** ; **SALCEDO, E.** ; **ARORA, J.** *Virtualizing satellite communication operations with aws*, 2022, vol. 9
- **AZMOODEH, A.** ; **DEHGHANTANHA, A.** ; **CONTI, M.** ; **CHOO, K.-K. R.** Detecting crypto-ransomware in iot networks based on energy consumption footprint. *Journal of Ambient Intelligence and Humanized Computing*, 2018, vol. 9, 1141-1152
- **BAKER, R.** ; **MACHARRIE, P.** ; **PHUNG, H.** ; **HANSFORD, J.** ; **REDDY, J.** ; **CAUSEY, S.** ; **SOBANSKI, J.** ; **WALSH, S.** ; **NIEMANN, R** ; **BEALL, D.** *Amazon web services (aws) cloud platform for satellite data processing*
- Security and privacy issues of satellite communication in the avlatlon domain. **BASELT, G.** ; **STROHMEIER, M.** ; **PAVUR, J.** ; **LENDERS, V.** ; **MARTINOVIC, I.** 2022 14th International Conference on Cyber Conflict: Keep Moving!(CyCon) (2022). IEEE, vol. 700, 285-307
- **BATEMAN, A.** Mutually assured surveillance at risk: Anti-satellite weapons and cold war arms control.. *Journal of Strategic Studies*, 2022, vol. 45 (1), 119-142
- **BOOK, G.** Security threats against space missions. CCSDS Secretariat, 2006
- **BOSCHETTI, N.** ; **GORDON, N. G.** ; **FALCO, G.** Space cybersecurity lessons learned from the viasat cyberattack. *ASCEND 2022*, 2022, 4380
- **BRUNO, M.** Why Amazon Web Services is Going to Space. *Aviation Week*, May 2023
- **CATHIS, A.** ; **LI, G.** ; **WEI, S.** ; **ORSHANSKY, M.** ; **TIWARI, M.** ; **GERSTLAUER, A.** *Sok paper: Power side-channel malware detection.*, 1-9
- **CAVIGLIONE, L.** ; **GAGGERO, M.** ; **LALANDE, J.-F.** ; **MAZURCZYK, W.** ; **URBA N'SKI, M.** Seeing the unseen: revealing mobile malware hidden communications via energy consumption and artificial intelligence.. *IEEE Transactions on Information Forensics and Security*, 2015, vol. 11 (4), 799-810
- Powerful: Mobile app fingerprinting via power analysis. **CHEN, Y.** ; **JIN, X.** ; **SUN, J.** ; **ZHANG, R.** ; **ZHANG, Y.** IEEE INFOCOM 2017-IEEE Conference on Computer Communications. IEEE, 2017, 1-9
- Research on satellite power anomaly detection method based on lstm. **CHENG, F.** ; **GUO, X.** ; **QI, Y.** ; **XU, J.** ; **QIU, W.** ; **ZHANG, Z.** ; **ZHANG, W.** ; **QI, N.** 2021 IEEE International Conference on Power Electronics, Computer Applications (ICPECA). IEEE, 2021, 706-710
- **CIO**. *Data centers in space: How the final frontier becomes a server room*, 2024
- **CLARK, S. S.** ; **RANSFORD, B.** ; **RAHMATI, A.** ; **GUINEAU, S.** ; **SORBER, J.** ; **XU, W.** ; **FU, K.** WattsUpDoc}: Power side channels to nonintrusively discover untargeted malware on embedded medical devices. *2013 USENIX Workshop on Health Information Technologies (HealthTech 13)*, 2013
- **COHEN, N.** ; **WHEELER, W. A.** ; **EWART, R.** ; **BETSER, J.** Space-craft embedded cyber defense-prototypes & experimentation. *AIAA SPACE 2016*, 2016, 5231
- **CURBO, J.** ; **FALCO, G.** Attack surface analysis for spacecraft flight software. *Tech. rep., EasyChair*, 2024
- **DARWISH, T.** ; **KURT, G. K.** ; **YANIKOMEROGLU, H.** ; **BELLEMARE, M.** ; **LAMONTAGNE, G.** Leo satellites in 5g and beyond networks: A review from a standardization perspective.. *IEEE Access*, 2022, vol. 10, 35040-35060
- **DE WAAL ALBERTS, A.** The degree of the lack of regulation of space debris within the current space law regime and suggestions for a prospective legal framework and technological interventions. *Space Security and Legal Aspects of Active Debris Removal*, 2019, 93-106

- **DI, B.** ; **SONG, L.** ; **LI, Y.** ; **POOR, H. V.** Ultra-dense leo: Integration of satellite access networks into 5g and beyond.. *IEEE Wireless Communications*, 2019, vol. 26 (2), 62-69
- **DING, F.** ; **LI, H.** ; **LUO, F.** ; **HU, H.** ; **CHENG, L.** ; **XIAO, H.** ; **GE, R.** Deeppower: Non-intrusive and deep learning-based detection of iot malware using power side channels. *Proceedings of the 15th ACM Asia conference on computer and communications security*, 2020, 33-46
- Investigating clustering algorithm dbscan to self-select locations for power based malicious code detection on smartphones. **DIXON, B.** 2017 Third International Conference on Mobile and Secure Services (MobiSecServ). IEEE, 2017, 1-7
- **EAR, E.** ; **BAILEY, B.** ; **XU, S.** Towards principled risk scores for space cyber risk management. *arXiv preprint arXiv:2402.02635*, 2024
- Characterizing cyber attacks against space systems with missing data: Framework and case study. **EAR, E.** ; **REMY, J. L.** ; **FEFFER, A.** ; **XU, S.** 2023 IEEE Conference on Communications and Network Security (CNS). IEEE, 2023, 1-9
- **EARLY, B. R.** ; **GARTZKE, E**. Spying from space: Reconnaissance satellites and interstate disputes.. *Journal of Conflict Resolution*, 2021, vol. 65 (9), 1551-1575
- ECONOMIC, U.-C., AND COMMISSION, S. R. report to congress of the US-China economic and security review commission. *US-China Economic and Security Review Commission*, 2019
- *Ground segment*, 2024
- *Tt&c and pdt systems and techniques section*, 2024
- **FALCO, G.** The vacuum of space cyber security. *2018 AIAA SPACE and Astronautics Forum and Exposition*, 2018, 5275
- **FALCO, G.** Cybersecurity principles for space systems.. *Journal of Aerospace Information Systems*, 2019, vol. 16 (2), 61-70
- **FALCO, G.** When satellites attack: Satellite-to-satellite cyber attack, defense and resilience. *ASCEND 2020.*, 2020, 4014
- Wannafly: an approach to satellite ransomware. **FALCO, G.** ; **THUMMALA, R.** ; **KUBADIA, A**. 2023 IEEE 9th International Conference on Space Mission Challenges for Information Technology (SMC-IT). IEEE, 2023, 84-93
- Cubesat security attack tree analysis. **FALCO, G.** ; **VISWANATHAN, A.** ; **SANTANGELO, A.** 2021 IEEE 8th International Conference on Space Mission Challenges for Information Technology (SMC-IT). IEEE, 2021, 68-76
- Online index of objects launched into outer space. *FOR OUTER SPACE AFFAIRS, U. N. O.*
- **FRITZ, J.** Satellite hacking: A guide for the perplexed. *Culture Mandala*, 2013, vol. 10 (1), 5906
- **GIULIARI, G.** ; **CIUSSANI, T.** ; **PERRIG, A.** ; **SINGLA, A.** ; **ZURICH, E.** Icarus: Attacking low earth orbit satellite networks. *USENIX Annual Technical Conference*, 2021, 317-331
- **GOODMAN, S. J.** ; **SCHMIT, T. J.** ; **DANIELS, J.** ; **REDMON, R. J.** The GOES-R series: a new generation of geostationary environmental satellites.. Elsevier, 2019
- Telemetry, tracking, and command (tt&c). **GUEST, A. N.** Handbook of Satellite Applications.. Springer, 2017, 1313-1324
- **HEWITSON, A.** *Satellite ground stations - everything you ever wanted to know and more...*, 2020, vol. 10
- **HIRIART, T.** ; **CASTET, J.-F.** ; **LAFLEUR, J. M.** ; **SALEH, J. H.** Comparative reliability of geo, leo, and meo satellites. *Proceedings of the international astronautical congress, IAC-09 D*, 2009, vol. 1
- **JOHNSON, H.** ; **YOUNG, W.** ; **GOESSLER et al.** Space threat assessment 2022. *Center for Strategic & International Studies.*, 2022
- **JONES, H.** The recent large reduction in space launch cost. *48th International Conference on Environmental Systems*
- **KARVINEN, K.** ; **TIKKA, T.** ; **PRAKS, J.** Using hobby prototyping boards and commercial-off-the-shelf (cots) components for developing low-cost, fast-delivery satellite subsystems. *Journal of Small Satellites*, 2015, vol. 4 (1), 301-314
- **KIM, H.** ; **SMITH, J.** ; **SHIN, K. G.** Detecting energy-greedy anomalies and mobile malware variants. *Proceedings of the 6th international conference on Mobile systems, applications, and services*, 2008, 239-252
- **KIM, J.** ; **JEONG, U.** ; **AHN, M.-H.** ; **KIM, J. H.** ; **PARK, R. J.** ; **LEE, H.** ; **SONG, C. H.** ; **CHOI, Y.-S.** ; **LEE, K.-H.** ; **YOO, J.-M. et al.** New era of air quality monitoring from space: Geostationary environment monitoring spectrometer (gems).. *Bulletin of the American Meteorological Society*, 2020, vol. 101 (1), E1-E22
- Integration of satellites in 5g through leo constellations. **KODHELI, O.** ; **GUIDOTTI, A.** ; **VANELLI-CORALLI, A.** GLOBECOM 2017-2017 IEEE Global Communications Conference. IEEE, 2017, 1-6
- **KODHELI, O.** ; **LAGUNAS, E.** ; **MATURO, N.** ; **SHARMA, S. K.** ; **SHANKAR, B.** ; **MONTOYA, J. F. M.** ; **DUNCAN, J. C. M.** ; **SPANO, D.** ; **CHATZINOTAS, S.** ; **KISSELEFF, S. et al.** Satellite communications in the new space era: A survey and future challenges. *IEEE Communications Surveys & Tutorials*, 2020, vol. 23 (1), 70-109
- **LI, H.** Geostationary satellites collocation. Springer, 2014

- Using power side-channel to implement anomaly-based intrusion detection on smart grid terminals. **LI, Y.** ; **HE, R.** ; **JI, X.** ; **XU, W.** 2019 IEEE 3rd Conference on Energy Internet and Energy System Integration (EI2). IEEE, 2019, 2669-2674
- **LIGHTBODY, D.** ; **NGO, D.-M.** ; **TEMKO, A.** ; **MURPHY, C. C.** ; **POPOVICI, E.** Attacks on iot: Side-channel power acquisition frame-work for intrusion detection. *Future Internet*, 2023, vol. 15 (5), 187
- **MANULIS, M.** ; **BRIDGES, C. P.** ; **HARRISON, R.** ; **SEKAR, V.** ; **DAVIS, A.** Cyber security in new space: analysis of threats, key enabling technologies and challenges. *International Journal of Information Security*, 2021, vol. 20, 287-311
- **MENZEL, W. P.** ; **PURDOM, J. F.** Introducing goes-i: The first of a new generation of geostationary operational environmental satellites.. *Bulletin of the American Meteorological Society*, 1994, vol. 75 (5), 757-782
- **MESSERGES, T. S.** ; **DABBISH, E. A.** ; **SLOAN, R. H.** Investigations of power analysis attacks on smartcards. *Smartcard*, 1999, vol. 99, 151-161
- **MICHALEVSKY, Y.** ; **SCHULMAN, A.** ; **VEERAPANDIAN, G. A.** ; **BONEH, D.** ; **NAKIBLY, G.** PowerSpy}: Location tracking using mobile device power analysis. *24th USENIX Security Symposium (USENIX Security 15)*, 2015, 785-800
- **MIRAUX, L.** Environmental limits to the space sector's growth.. *Science of The Total Environment*, 2022, vol. 806, 150862
- **MORALES-FERRE, R.** ; **RICHTER, P.** ; **FALLETTI, E.** ; **DE LA FUENTE, A.** ; **LOHAN, E. S.** A survey on coping with intentional interference in satellite navigation for manned and unmanned aircraft.. *IEEE Communications Surveys & Tutorials*, 2019, vol. 22 (1), 249-291
- **MORTON, Y. J.** ; **VAN DIGGELEN, F.** ; **SPILKER JR, J. J.** ; **PARKINSON, B. W.** ; **LO, S.** ; **GAO, G.** Position, navigation, and timing technologies in the 21st century: Integrated satellite navigation, sensor systems, and civil applications. John Wiley & Sons, 2021, vol. 1
- Power side-channel attack detection through battery impedance monitoring. **MUNNY, R.** ; **HU, J.** 2021 IEEE International Symposium on Circuits and Systems (ISCAS). IEEE, 2021, 1-5
- **NALEPA, J.** ; **MYLLER, M.** ; **ANDRZEJEWSKL, J.** ; **BENECKI, P.** ; **PIECHACZEK, S.** ; **KOSTRZEWA, D.** Evaluating algorithms for anomaly detection in satellite telemetry data. *Acta Astronautica*, 2022, vol. 198, 689-701
- *11.0 ground data systems and mission operations*, 2024
- **OBIED, M. A.** ; **GHALEB, F. F.** ; **HASSANIEN, A. E.** ; **ABDELFATTAH, M.** ; **ZAKARIA, W.** Deep clustering-based anomaly detection and health monitoring for satellite telemetry. *Big Data and Cognitive Computing*, 2023, vol. 7 (1), 39
- Satellite telemetry data anomaly detection using bi-lstm prediction based model. **PAN, D.** ; **SONG, Z.** ; **NIE, L.** ; **WANG, B.** 2020 IEEE International Instrumentation and Measurement Technology Conference (I2MTC). IEEE, 2020, 1-6
- **PARKINSON, B. W.** ; **STANSELL, T.** ; **BEARD, R.** ; **GROMOV, K.** A history of satellite navigation. *Navigation*, 1995, vol. 42 (1), 109-164
- **PAVUR, J.** ; **MARTINOVIC, I.** Building a launchpad for satellite cyber-security research: lessons from 60 years of spaceflight.. *Journal of Cybersecurity*, 2022, vol. 8 (1), tyac008
- **PELED, R.** ; **AIZIKOVICH, E.** ; **HABLER, E.** ; **ELOVICI, Y.** ; **SHAB-TAI, A.** Evaluating the security of satellite systems. *arXiv preprint arXiv:2312.01330*, 2023
- **PEREZ-NEIRA, A. I.** ; **VAZQUEZ, M. A.** ; **SHANKAR, M. B.** ; **MALEKI, S.** ; **CHATZINOTAS, S.** Signal processing for high-throughput satellites: Challenges in new interference-limited scenarios.. *IEEE Signal Processing Magazine*, 2019, vol. 36 (4), 112-131
- **RAMEZANPOUR, K.** ; **AMPADU, P.** ; **DIEHL, W.** Scaul: Power side-channel analysis with unsupervised learning.. *IEEE Transactions on Computers*, 2020, vol. 69 (11), 1626-1638
- **RAWLINS, F.** ; **BAKER, R.** ; **MARTINOVIC, I.** Death by a thousand cots: Disrupting satellite communications using low earth orbit constellations. *arXiv preprint arXiv:2204.13514*, 2022
- Enhancing smart grid cyber security using power fingerprinting: Integrity assessment and intrusion detection. **REED, J. H.** ; **GONZALEZ, C. R. A.** 2012 Future of Instrumentation International Workshop (FIIW) Proceedings. IEEE, 2012, 1-3
- **SALIM, S.** ; **MOUSTAFA, N.** ; **REISSLEIN, M.** Cybersecurity of satellite communications systems: A comprehensive survey of the space, ground, and links segments. *IEEE Communications Surveys & Tutorials*, 2024
- **SCHOLL, M.** ; **SCHOLL, M.** ; **SULOWAY, T.** Introduction to cybersecurity for commercial satellite operations.. US Department of Commerce, National Institute of Standards and Technology, 2023
- Power consumption analysis as a detection indicator for cyberattacks on smart home devices. **SCHORR, V.** ; **KAMENEV, N.** ; **BLEISTEIN, T.** ; **WERTH, D.** ; **WENDZEL, S.** ; **WEIGOLD, T.** Energy Informatics Academy Conference. Springer, 2023, 224-239

- **SHAOFEI, M.** ; **JIANSHENG, S.** ; **QI, Y.** ; **WEI, X.** Analysis of detection capabilities of leo reconnaissance satellite constellation based on coverage performance. *Journal of Systems Engineering and Electronics*, 2018, vol. 29 (1), 98-104
- **SHELTON, M. A.** ; **SAMWEL, N.** ; **BATINA, L.** ; **REGAZZONI, F.** ; **WAGNER, M.** ; **YAROM, Y.** Rosita: Towards automatic elimination of power-analysis leakage in ciphers. *arXiv preprint arXiv:1912.05183*, 2019
- Data transmission media. **SOBOLEWSKI, J. S.** Encyclopedia of Physical Science and Technology. Academic Press, 2003, 277-303
- *Number of active satellites by year*, 2024
- An anomalous behavior detection method based on power analysis utilizing steady state power waveform predicted by lstm. **TAKASAKI, K.** ; **KIDA, R.** ; **TOGAWA, N.** 2021 IEEE 27th International Symposium on On-Line Testing and Robust System Design (IOLTS). IEEE, 2021, 1-7
- **TEDESCHI, P.** ; **SCIANCALEPORE, S.** ; **DI PIETRO, R.** Satellite-based communications security: A survey of threats, solutions, and research challenges. *Computer Networks*, 2022, 109246
- **UTYAMISHEV, D.** ; **PARTIN-VAISBAND, I.** Real-time detection of power analysis attacks by machine learning of power supply variations on-chip.. *IEEE Transactions on Computer-Aided Design of Integrated Circuits and Systems*, 2018, vol. 39 (1), 45-55
- **VATALARO, F.** ; **CORAZZA, G. E.** ; **CAINI, C.** ; **FERRARELLI, C.** Analysis of leo, meo, and geo global mobile satellite systems in the presence of interference and fading.. *IEEE Journal on selected areas in communications*, 1995, vol. 13 (2), 291-300
- **WANG, Y.** ; **GUO, H.** ; **YAN, Q.** Ghosttalk: Interactive attack on smartphone voice system through power line. *arXiv preprint arXiv:2202.02585*, 2022
- **WERNER, D.** *Azure orbital space unveils software tools for space applications*, 2022, vol. 11
- **WILLBOLD, J.** ; **SCHLOEGEL, M.** ; **VÖGELE, M.** ; **GERHARDT, M.** ; **HOLZ, T.** ; **ABBASI, A.** Space odyssey: An experimental software security analysis of satellites. *IEEE Symposium on Security and Privacy*, 2023
- Addp: Anomaly detection for dtu based on power consumption side-channel. **XU, A.** ; **JIANG, Y.** ; **CAO, Y.** ; **ZHANG, G.** ; **JI, X.** ; **XU, W.** 2019 IEEE 3rd Conference on Energy Internet and Energy System Integration (EI2). IEEE, 2019, 2659-2663
- **XU, Z.** ; **CHENG, Z.** ; **TANG, Q.** ; **GUO, B.** An encoder-decoder generative adversarial network-based anomaly detection approach for satellite telemetry data. *Acta Astronautica*, 2023, vol. 213, 547-558
- **YANG, H.** ; **TANG, R. et al.** Power consumption based android malware detection.. *Journal of Electrical and Computer Engineering*, 2016, vol. 2016
- **YUE, P.** ; **AN, J.** ; **ZHANG, J.** ; **YE, J.** ; **PAN, G.** ; **WANG, S.** ; **XIAO, P.** ; **HANZO, L.** Low earth orbit satellite security and reliability: Issues, solutions, and the road ahead.. *IEEE Communications Surveys & Tutorials*, 2023
- **YUEN, P.** *Cloudflare prevents largest ddos attack and potentially saved a lot of satellite data*, 28 October 2023, vol. 2
- **ZHANG, T.** ; **TEHRANIPOOR, M.** ; **FARAHMANDI, F.** Trustguard: Standalone fpga-based security monitoring through power side-channel.. *IEEE Transactions on Very Large Scale Integration (VLSI) Systems*, 2023
- **ZHANG, Y.** ; **WANG, Y.** ; **HU, Y.** ; **LIN, Z.** ; **ZHAI, Y.** ; **WANG, L.** ; **ZHAO, Q.** ; **WEN, K.** ; **KANG, L.** Security performance analysis of leo satellite constellation networks under ddos attack. *Sensors*, 2022, vol. 22 (19), 7286
- **ZHEN, L.** ; **BASHIR, A. K.** ; **YU, K.** ; **AL-OTAIBI, Y. D.** ; **FOH, C. H.** ; **XIAO, P.** Energy-efficient random access for leo satellite-assisted 6g internet of remote things.. *IEEE Internet of Things Journal*, 2020, vol. 8 (7), 5114-5128